# FASCICULE DE BREVET EUROPEEN

(11) **EP 1 282 979 B1**
(45) Date de publication et mention de la délivrance du brevet: **22.11.2006**
(21) Numéro de dépôt: 01934075.1
(22) Date de dépôt: 10.05.2001
(51) Int. Cl.: H04M 15/00

(54) **PROCEDE ET DISPOSITIF DE TELEPHONIE MOBILE PERMETTANT L'ACCES A UN SERVICE CONTEXTUEL EXPLOITANT LA POSITION ET/OU L'IDENTITE DE L'USAGER**
VERFAHREN UND VORRICHTUNG DER MOBILTELEFONIE ZUR BEREITSTELLUNG DES ZUGRIFFS AUF EINEN KONTEXTSERVICE UNTER AUSNUTZUNG DER POSITION UND/ODER DER IDENTITÄT DES NUTZERS
MOBILE TELEPHONE METHOD AND DEVICE ENABLING ACCESS TO A CONTEXTUAL SERVICE OPERATING ON USER POSITION AND/OR IDENTITY

(30) Priorité: 18.05.2000 WO PCT/FR00/01350; 03.10.2000 FR 0012611
(43) Date de publication de la demande: 12.02.2003
(60) Demande divisionnaire: 06009815.9
(73) Titulaire: INRIA INSTITUT NATIONAL DE RECHERCHE EN INFORMATIQUE ET EN AUTOMATIQUE, Rocquencourt F-78153 Le Chesnay (FR)
(72) Inventeur: BANATRE, Michel, F-35111 La Fresnais (FR); COUDERC, Paul, F-35000 Rennes (FR)
(74) Mandataire: Plaçais, Jean Yves
(86) Numéro de dépôt international: PCT/FR2001/001409
(87) Numéro de publication internationale: WO 2001/089189

(56) Documents cités:
- EP-A- 0 568 824
- WO-A-98/27778
- GB-A- 2 322 262
- US-A- 5 890 054

## Description

La présente invention concerne la téléphonie mobile permettant l'accès à un service contextuel exploitant la position et/ou l'identité de l'usager.

Elle trouve une application générale dans la téléphonie mobile et plus particulièrement dans la localisation et/ou l'identification de l'usager afin d'offrir des services adaptés et modulés, notamment au niveau de la tarification mais aussi au niveau du contenu, du contrôle d'accès et/ou de la disponibilité dudit service.

On connaît déjà des solutions qui prévoient de marier la téléphonie mobile et le système de radionavigation GPS (système de positionnement global) pour la localisation et la modulation de tarif. Toutefois, de telles solutions sont difficiles à mettre en oeuvre, notamment en intérieur, et sont de plus limitées à des zones géographiques statiques.

On connaît aussi des solutions qui utilisent la triangulation sur les bornes définissant les cellules d'un réseau téléphonique cellulaire. Cependant, ce genre de solution est imprécis.

Dans la Demande internationale PCT/FR00/01350, Le Demandeur a déjà proposé une solution fondée sur une approche différente dans laquelle des zones géographiques précises sont définies et auxquelles on associe des traitements ou des services spécifiques.

Dans cette Demande internationale, il est fait usage notamment de téléphonie radiocellulaire et/ou de téléphonie radiofréquence courte portée pour définir une zone géographique précise et adapter et/ou moduler, de façon dynamique, sans souscription d'un abonnement, au moins une application associée à un appel, en fonction de cet appel dans la zone couverte.

Le Demandeur s'est posé le problème d'exploiter cette solution à toute infrastructure de communication et à tout service contextuel apte à utiliser la position et/ou l'identité d'un usager porteur d'un poste portatif pour créer, contrôler l'accès et/ou moduler au moins certaines caractéristiques dudit service.

La présente invention apporte justement une solution à ce problème.

Un autre example ce trouve dans le document GB 2 322 262 (Lucent Tech. Inc) 19-8-1998.

Selon une définition générale du procédé de téléphonie selon l'invention,
a) on prévoit au moins un service contextuel apte à exploiter la position et/ou l'identité d'un usager porteur d'un poste portatif pour créer, contrôler l'accès et/ou moduler au moins certaines caractéristiques dudit service,
b) on prévoit au moins une interface d'accès appartenant à une infrastructure de communication choisie, pour permettre l'accès audit service contextuel à au moins un poste portatif d'usager selon une couverture géographique choisie,
c) on prévoit au moins une station mobile distribuée dans la zone de couverture de l'interface d'accès,
d) on équipe la station mobile de moyens de communication aptes à établir une communication radiofréquence de courte portée à l'intérieur d'un périmètre choisi entre le poste portatif d'usager, et la station mobile, et
e) on équipe au moins un poste portatif d'usager de moyens de communication radiofréquence de courte portée conjugués avec ceux de la station mobile pour établir ladite communication radiofréquence de courte portée à l'intérieur du périmètre choisi entre le poste portatif et la station mobile.

Ainsi grâce à l'invention, le poste portatif d'usager peut communiquer avec la station mobile ainsi qu'avec l'interface d'accès pour accéder audit service contextuel adapté selon la position et/ou l'identité de l'usager.

En pratique, au moins certaines caractéristiques du service contextuel appartiennent au groupe formé par la présence/absence, le contenu, la disponibilité, le contrôle d'accès, la tarification dudit service.

De préférence, on prévoit une infrastructure de communication appartenant au groupe formé par le réseau cellulaire global du type GSM, UMTS ou analogue, le réseau local de type ad hoc ou analogue.

En pratique, on prévoit un poste portatif appartenant au groupe formé par les téléphones mobiles, les assistants numériques personnels ou analogues.

Selon un autre aspect de l'invention, on prévoit une pluralité de stations mobiles agencées en réseau.

Très avantageusement, la station mobile ou la pluralité de stations mobiles agencées en réseau couvre(nt) sensiblement exactement l'intérieur d'un périmètre choisi.

De préférence, on attribue un identifiant de périmètre pour identifier ledit périmètre, à chaque identifiant de périmètre étant associé au moins un attribut permettant de localiser l'usager et/ou de caractériser le périmètre.

Avantageusement, à chaque identifiant de périmètre est associée une liste d'attributs.

Avantageusement, on attribue un identifiant de service (par exemple de type adresse URL) pour permettre l'accès au service contextuel ainsi identifié.

Selon une autre caractéristique de l'invention, la station mobile est apte à établir une communication avec l'interface d'accès, la station mobile jouant ainsi le rôle d'un poste portatif.

En pratique, on attribue un identifiant d'usager pour chaque poste portatif d'usager afin d'identifier ledit usager.

Lorsqu'un usager entre avec un poste portatif dans une zone couverte par le réseau, le service contextuel est adapté en fonction de l'identifiant de l'usager et/ou de l'identifiant de périmètre dans lequel se trouve le poste portatif d'usager.

Selon un premier mode de mise en oeuvre du procédé selon l'invention, on prévoit une étape d'acquisition de l'identifiant de service et de l'identifiant de périmètre à l'issue d'une communication radiofréquence courte portée établie entre le poste portatif d'usager qui entre dans le périmètre et la station mobile la plus proche, et l'on prévoit une étape d'application du service contextuel ainsi connu par l'identifiant de service à l'issue d'une communication bidirectionnelle établie entre le poste portatif d'usager et l'interface d'accès.

Selon ce premier mode de mise en oeuvre, le service peut appliquer tout traitement exploitant l'identité de l'usager et/ou sa localisation et lui offrir ainsi un contenu adapté contextuellement.

Selon un second mode de mise en oeuvre du procédé selon l'invention, on prévoit une étape d'acquisition de l'identifiant de l'usager à l'issue d'une communication radiofréquence courte portée établie entre le poste portatif d'usager qui entre dans le périmètre et la station mobile la plus proche, et l'on prévoit une étape d'application du service contextuel à l'issue d'une communication établie entre la station mobile et l'interface d'accès pour annoncer au service la présence de l'usager dans le périmètre considéré, le service étant apte à établir une interaction avec le poste portatif de l'usager en adaptant le contenu dudit service au contexte de l'usager, grâce au couple-identifiant usager et identifiant périmètre.

Selon un troisième mode de réalisation de l'invention dans lequel on prévoit une liste d'attributs et une pluralité d'identifiants de service associés à chaque identifiant de périmètre, l'étape d'acquisition des identifiants de service et des attributs de l'identifiant de périmètre est réalisée à l'issue d'une communication radiofréquence courte portée établie entre le poste portatif d'usager qui entre dans le périmètre et la station mobile la plus proche.

A l'issue de l'étape d'acquisition des identifiants de service et des attributs de l'identifiant de périmètre, on prévoit avantageusement une étape de sélection d'un service contextuel à l'issue d'une session de sélection de type requête/réponse entre le poste portatif d'usager et un serveur distant appartenant à l'interface d'accès, et dans laquelle la requête de sélection comprend au moins certains attributs de l'identifiant de paramètre ainsi acquis tandis que le serveur distant communique au poste portatif d'usager via l'infrastructure d'accès l'ensemble des identifiants de service pertinents répondant à la requête et parmi lequel l'usager sélectionne l'identifiant de service de son choix.

La présente invention a également pour objet un dispositif de téléphonie mobile pour la mise en oeuvre du procédé mentionné ci-avant, ainsi qu'un poste portatif d'usager, une station mobile et une interface d'accès destinés à coopérer avec ledit dispositif de téléphonie mobile.

D'autres caractéristiques et avantages de l'invention apparaîtront à la lumière de la description détaillée ci-après et des dessins dans lesquels :
- la figure 1 représente schématiquement l'architecture du dispositif de téléphonie mobile selon l'invention ; et
- la figure 2 illustre schématiquement une application de profilage de client utilisant le procédé de téléphonie mobile de l'invention.

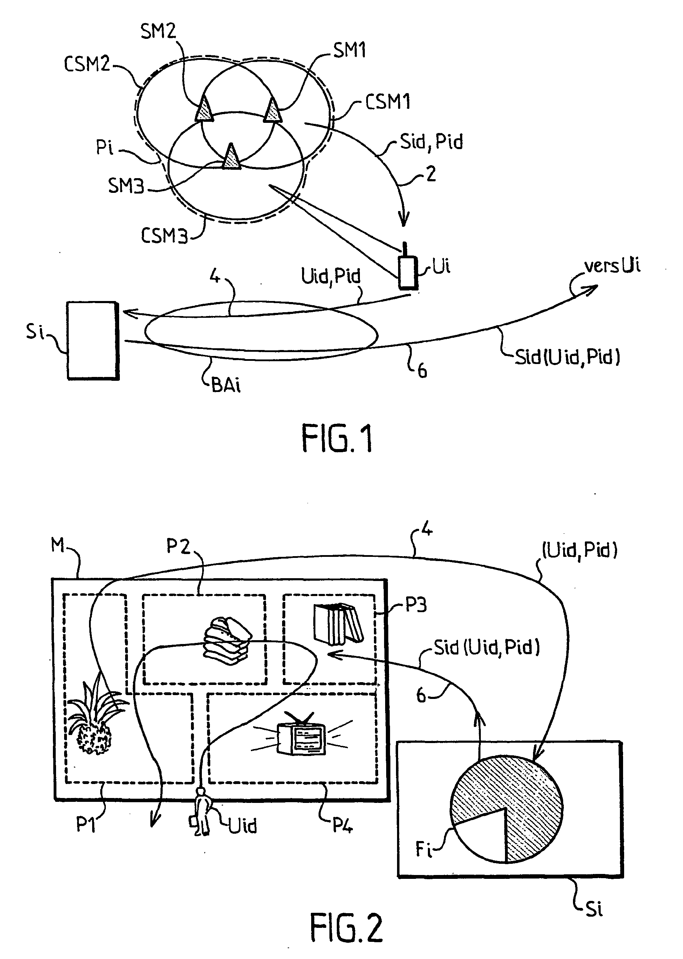

En référence à la figure 1, on a représenté un dispositif de téléphonie mobile apte à mettre en oeuvre le procédé de téléphonie mobile permettant l'accès à un service contextuel exploitant la position et/ou l'identité de l'usager. Dans la figure 1, le poste portatif Ui est situé dans le périmètre Pi défini par les stations mobiles SMi que l'on décrira plus en détail ci-après.

Par exemple, une communication vocale entre usagers dont la tarification est modulée par la position de l'appelant est un service contextuel. Un service contextuel peut aussi être relatif à un profilage des usagers, un service spécifique ou local, une communication privilégiée entre l'exploitant et l'usager, la fourniture de documents ou pages web répondant à une requête, etc.

Selon l'invention, un service contextuel Si va exploiter la position et/ou l'identité d'un usager porteur d'un poste portatif pour créer, contrôler l'accès et/ou moduler au moins certaines caractéristiques dudit service.

En pratique, au moins certaines caractéristiques du service contextuel Si appartiennent au groupe formé par la présence-/absence, le contenu, la disponibilité, le contrôle d'accès, la tarification du service contextuel Si.

Selon l'invention, on prévoit au moins une interface d'accès Bai appartenant à une infrastructure de communication choisie, pour permettre l'accès audit service contextuel Si à au moins un poste portatif usager Ui selon une couverture géographique choisie.

Par exemple, l'infrastructure de communication appartient au groupe formé par un réseau cellulaire global du type GSM, (système mobile global), UMTS (système de télécommunication mobile universel) ou analogue, un réseau local du type réseau ad hoc dont on trouvera une description détaillée ci-après, " Bluetooth" tel que celui décrit dans le document "Specification of the Bluetooth system core" disponible à l'adresse Url suivante : http://www.bluetooth.com/developer/specification/specification.asp, ou un réseau de téléphonie microcellulaire du type DECT dont la technologie est décrite dans l'adresse http://www.etsi.org/technicalactiv/dect.html.

L'infrastructure de communication peut être de type global dans le sens où elle est accessible partout, ou local dans le sens où elle n'est accessible que dans certaines zones.

Par exemple, la communication entre la station mobile SMi et l'interface d'accès Bai est de type GSM/data ou GPRS (pour service radio par paquet général).

Par exemple, l'interface d'accès Bai est capable de propager (router) des appels en provenance des stations mobiles SMi vers d'autres interfaces d'accès BAi. Pour cela, l'interface d'accès Bai est par exemple équipée d'une interface "courte portée radiofréquence" que l'on décrira plus en détail ci-après et d'une interface d'accès téléphonique classique.

Les bornes ou interfaces d'accès Bai peuvent aussi être de type WAP (protocole d'application sans fil).

Selon l'invention, on prévoit en outre au moins une station mobile SMi distribuée dans la zone de couverture de l'interface d'accès Bai.

En référence à la figure 1, on a représenté trois stations mobiles SM individualisées en SM1 à SM3. Les stations mobiles SM sont agencées de telle façon qu'elles couvrent sensiblement exactement l'intérieur d'un périmètre choisi Pi. En variante, un périmètre Pi peut être défini par une seule station mobile SMi.

Dans l'exemple de la figure 1, la station mobile SM1 a une couverture CSM1, la station mobile SM2 a une couverture CSM2 et la station mobile SM3 a une couverture CSM3. L'union des couvertures CSMi des stations mobiles SMi définit ici un périmètre choisi Pi.

Le déplacement d'au moins une station mobile engendre la modification du périmètre Pi. Ainsi, on peut modifier au gré des applications le contour du périmètre en déplaçant une ou plusieurs stations mobiles. Il en résulte une mise en oeuvre facile et souple par rapport aux techniques antérieures, notamment celles fondées sur le système GPS.

En réseau ad hoc que l'on décrira plus en détail ci-après, le routage des informations entre les stations mobiles est reconfiguré dynamiquement, automatiquement et sensiblement instantanément.

Chaque station mobile SM est apte à établir une communication radiofréquence de courte portée à l'intérieur du périmètre Pi associé, entre les postes portatifs d'usagers Ui, la ou les stations mobiles SMi et la ou les interfaces d'accès BAi.

Les postes portatifs Ui d'usagers sont avantageusement équipés de moyens de communication radiofréquence de courte portée conjugués avec ceux des stations mobiles SMi. Ces moyens de communication radiofréquence de courte portée équipant les postes portatifs d'usagers permettent ainsi d'établir une communication radiofréquence de courte portée à l'intérieur du périmètre choisi Pi entre le poste portatif, la ou les stations mobiles et la ou les interfaces d'accès Bai.

Les stations mobiles SMi sont ainsi agencées pour créer un chemin de communication entre le poste portatif Ui situé à l'intérieur du périmètre Pi et lesdites stations mobiles, en utilisant les moyens de communication radiofréquence de courte portée disponibles sur les stations mobiles et les postes portatifs.

En pratique, ce routage de type réseau ad hoc peut être mis en oeuvre au-dessus de la couche liaison, par exemple, par la technologie "Wavelan" décrite à l'adresse http://www.standards.IEEE.org/catalog/IEEE802.11.html ou encore la technologie "Bluetooth" mentionnée ci-avant.

Le routage du réseau ad hoc peut être mis en oeuvre selon des algorithmes décrits dans l'article "Routing in Ad Hoc Networks of Mobile Hosts, David B. JOHNSON, Computer Science Department, Carnegie Mellon University, Pittsburgh PA 15213-3891, Proceedings of the IEEE Worshop on Mobile Computing Systems and Applications, Decembre 1994".

La topologie du réseau est dynamique. Elle évolue en fonction des déplacements possibles des stations mobiles et des postes portatifs. L'agencement des stations mobiles se fait de telle sorte qu'il existe un chemin entre le poste portatif Ui et les stations mobiles SMi pour le périmètre considéré.

Les stations mobiles ont besoin d'une fonction de routage pour communiquer entre elles dans le périmètre considéré. Cette fonction de routage peut être dynamique (réseau ad hoc), c'est-à-dire sensiblement transparent et automatique aux yeux de l'exploitant, ou bien statique ou manuel, c'est-à-dire dont les tables de routage sont configurées par un administrateur de réseau.

En pratique, on attribue un identifiant de périmètre Pid pour ledit réseau ainsi formé par la station ou la pluralité de stations mobiles couvrant sensiblement exactement l'intérieur d'un périmètre Pi choisi. Comme on le verra plus en détail ci-après, l'identifiant de périmètre Pid permet de localiser l'usager et/ou de caractériser le périmètre.

De même, on attribue un identifiant de service Sid pour la station ou le réseau de stations mobiles SMi. L'identifiant de service Sid est susceptible d'offrir l'accès aux services associés audit réseau.

Enfin, on attribue un identifiant d'usager Uid pour chaque poste portatif d'usager afin d'identifier ledit usager.

Selon l'invention, le service contextuel Si est adapté en fonction de l'identifiant de l'usager Uid et/ou de l'identifiant de périmètre Pid, dans lequel se trouve le poste portatif d'usager.

Les postes portatifs d'usagers peuvent être du type téléphone mobile, assistant numérique personnel ou analogue. Ces dispositifs disposent à la fois d'une interface de communication radiofréquence à courte portée permettant de communiquer avec les réseaux définis ci-avant ainsi que des dispositifs d'interface et de traitement permettant d'accéder aux services contextuels. Par exemple, dans le cas d'un service de type fourniture de pages web, le poste portatif d'usager est équipé d'une unité de traitement à microprocesseur et de mémoires, ainsi que d'une pile de protocoles de communication appropriée pour l'accès aux services de navigation de pages web, et d'un applicatif de type navigateur pour présenter les pages à l'usager.

Certains postes portatifs peuvent faire office de stations mobiles si des protocoles de routage sont intégrés dans les postes portatifs. Ainsi, des individus peuvent définir une zone à service contextuel à l'aide d'un tel poste portatif qui joue le rôle à la fois de station mobile et de poste portatif et réciproquement.

En référence à la figure 1, selon un premier mode de mise en oeuvre du procédé de téléphonie mobile selon l'invention, on prévoit une première étape d'acquisition de l'identifiant de service Sid et de l'identifiant de périmètre Pid à l'issue d'une communication radiofréquence de courte portée 2 (par exemple réseau ad hoc) établie entre le poste portatif d'usager Ui qui entre dans le périmètre Pi et la station mobile SMi la plus proche. Cette étape permet ainsi d'acquérir par le poste portatif l'identité du périmètre Pid et l'identité du service Sid par une communication 2 établie entre le poste portatif Ui et la station mobile SMi la plus proche de celui-ci.

On définit ensuite une étape d'application du service contextuel connu par l'identifiant de service Sid à l'issue d'une communication 4 établie entre le poste portatif d'usager Ui et l'interface d'accès Bai. Cette communication 4 est par exemple de type GSM/data ou GPRS.

Enfin, une communication 6 (par exemple de même nature que celle de la communication 4) est établie entre l'interface d'accès Bai et le poste portatif Ui pour adapter selon l'identité Ui et/ou la position de l'usager Pid, le service Si appliqué à l'usager. Le service contextuel Si applique tout traitement exploitant l'identité de l'usager Uid et/ou de sa localisation Pid et offre ainsi des caractéristiques de service adaptées contextuellement.

Le procédé de téléphonie mobile selon l'invention consiste donc à couvrir un périmètre Pi auquel on associe des services
ou traitements spécifiques à l'aide d'un réseau de communication courte portée. Ce réseau courte portée est constitué d'un ensemble de noeuds ou stations mobiles SMi. A ce réseau, on associe donc un identifiant de périmètre Pid ainsi qu'un identifiant de service Sid permettant d'accéder aux services associés audit périmètre. Chaque noeud du réseau connaît l'identifiant Pid et l'identifiant Sid associé.

En variante, le réseau permet aussi de n'inclure que l'identifiant de périmètre Pid, auquel cas le service identifiant Sid est configuré dans le poste portatif de l'usager.

Lorsque l'identifiant de service Sid est initialement configuré dans le poste portatif d'usager, le service Si associé peut permettre l'accès à d'autres services.

L'identifiant de périmètre Pid permet de caractériser le périmètre ou la position d'utilisateur (attribut principal de l'identifiant de périmètre Pid).

Plusieurs services peuvent être associés à un périmètre. Il suffit pour cela que l'identifiant de service Sid associé à un périmètre choisi pointe vers un service permettant lui-même d'accéder à plusieurs services. Il est à remarquer que ces services complémentaires peuvent être sélectionnés dynamiquement en fonction de l'identifiant de périmètre Pid. Ce système est analogue au monde Internet dans lequel une adresse URL permet d'accéder à une page donnant accès à d'autres URL (liens hypertextes).

Les stations mobiles peuvent communiquer avec d'autres réseaux extérieurs, par exemple pour permettre le paramétrage à distance des identifiants Sid et/ou des identifiants Pid ou encore de communiquer avec les services contextuels si nécessaire.

Le poste portatif d'usager dispose d'un terminal mobile identifié de façon unique par un identifiant d'abonné Uid.

Une autre possibilité de mise en oeuvre du procédé de téléphonie mobile selon l'invention consiste à faire découvrir par les stations mobiles l'identité de l'usager Uid présent dans le périmètre Pi par une communication radiofréquence de courte portée (par exemple réseau ad hoc) entre le poste portatif Ui et la station mobile SMi la plus proche de celui-ci. La station mobile SMi établit ensuite une communication avec l'interface d'accès pour accéder au service. Cette communication est par exemple de type GSM/DATA ou GPRS . Elle permet d'annoncer à l'interface d'accès, c'est-à-dire au service, la présence de l'usager caractérisé par l'identifiant Uid dans la zone considérée Pid. Le service peut alors établir une interaction avec l'usager en adaptant le contenu dudit service au profil de l'usager grâce au couple identifiant usager Uid et identifiant périmètre Pid.

Grâce au procédé selon l'invention, le positionnement de l'usager est suffisamment précis pour de nombreuses applications, et cette technologie est utilisable aussi bien à l'intérieur qu'à l'extérieur d'un bâtiment.

La mise en place d'une station mobile est simple et surtout la définition des périmètres est modifiable à volonté par simple redisposition physique des stations mobiles. Les stations mobiles peuvent même être liées à des éléments de l'environnement rendant du même coup implicite la définition des zones ou périmètres. Par exemple, les stations mobiles peuvent être intégrées dans des supports de rayon d'un magasin, permettant ainsi d'offrir des services contextuels en fonction des rayons, sans nécessiter de nouvelle configuration lorsque les rayons sont disposés.

L'invention permet d'exploiter des technologies déjà disponibles en téléphonie mobile limitant le coût des développements nécessaires. Le couple identifiant usager Uid/identifiant périmètre Pid caractérise de façon minimale le contexte auquel appartient l'utilisateur. Ce couple est lié à un service contextuel identifié par un identifiant de service Sid.

L'invention trouve par exemple une application dans le ticket virtuel. Dans cette application, lorsque l'usager pénètre dans l'enceinte d'une gare, il peut consulter le panneau d'affichage et se diriger vers le train de son choix (en fonction de l'horaire et de la destination). Un réseau de stations mobiles, par exemple de type ad hoc, est installé dans le train. Lorsque l'usager pénètre dans le train, c'est-à-dire dans le périmètre du réseau, le service de réservation rapide correspondant à l'identifiant Sid est activé et l'usager confirme son départ avec son poste portatif. Une place peut lui être automatiquement attribuée si elle est disponible et indiquée sur son poste portatif. Un système de paiement en ligne permet de valider la transaction.

Une autre application du procédé selon l'invention concerne le profilage de clients, notamment d'un grand magasin ou analogue (figure 2). Les périmètres Pi sont par exemple définis dans chaque rayon (vêtements P2, alimentation P1, livres P3, appareils électroniques P4). A chaque fois qu'un client avec son poste portatif d'usager Ui visite le magasin M, son profil Fi est mis à jour grâce au temps passé dans chaque rayon ou périmètre Pi. Lorsqu'une promotion concerne un produit susceptible de l'intéresser (car il est actuellement dans le rayon Pi ou que son profil Fi indique un temps important consacré habituellement à ce type de produit), un service de publicité contextuelle Si, correspondant à l'identifiant de service Sid affecté au rayon Pi, peut informer le client de la promotion en lui adressant un message publicitaire adapté.

Actuellement, un mode de réalisation envisagé privilégie une infrastructure d'accès au service de type GSM ou UMTS, ou autre réseau téléphonique cellulaire analogue et un réseau ad hoc exploitant une interface radiofréquence courte portée telle que "Bluetooth" pour la localisation. Cependant, en raison de l'évolution technologique et/ou des choix des exploitants, il peut être envisagé d'utiliser d'autres infrastructures ou interfaces, notamment un réseau ad hoc ou analogue comme infrastructure d'accès au service.

Dans la description, l'identifiant Pid est considéré jusqu'à présent comme un identifiant d'un périmètre Pi dont le contour et la position géographique sont définis par la couverture radiofréquence d'une ou plusieurs stations mobiles SMi agencées de préférence en réseau. Un tel identifiant Pid permet ainsi de localiser l'usager lorsqu'il se trouve dans ce périmètre Pi.

En variante, l'identifiant Pid peut aussi identifier et caractériser un contexte associé audit périmètre. En effet, la position géographique n'est qu'un attribut dudit périmètre. Les autres attributs peuvent être ainsi la date ou les identités des autres entités mobiles présentes à proximité.

Dans cette variante, l'identifiant Pid est donc constitué d'un ensemble d'attributs qui caractérisent le contexte Ci associé au périmètre Pi défini par la présence de la ou des stations mobiles SMi.

Un poste portatif d'usager Ui perçoit alors le contexte non plus comme un identifiant unique mais comme un ensemble d'attributs visibles à un instant donné à un endroit donné.

En considérant un ensemble de stations mobiles SM1, SM2, SM3,... SMn auxquelles sont associées des périmètres P1, P2, P3,... Pn, il est prévu selon l'invention de faire correspondre un contexte Ci à chaque périmètre Pi.

Un contexte Ci défini par une station mobile SMi est exprimé par une série d'attributs Aij, avec i et j nombres entiers.

Par exemple, dans le cas d'un service de type recherche de documents sur internet (web), un contexte est exprimé par des attributs textuels (mots clés) qui définissent des documents ayant une correspondance avec le contexte.

En pratique, à un instant donné et à un endroit donné, un poste portatif d'usager Ui est à portée d'un ensemble visible V de stations mobiles SM (celles qui sont à portée de communication), V = (SMh, SMk,..., SMl).

Le contexte C perçu par une entité mobile (poste portatif d'usager) se définit par l'union des contextes associés aux stations mobiles appartenant à V, C = Ch U Ck U... Cl.

La description du contexte devient donc beaucoup plus précise qu'un simple identifiant statique Pid.

Afin de pouvoir associer des identifiants de services ou des informations Sid à un contexte donné, une fonction d'interprétation I du contexte peut être avantageusement prévue.

La fonction I associe à un contexte C un ensemble de services liés à C. La fonction d'interprétation I peut être considérée comme une fonction de sélection.
I:C → (Sid1, Sid2,... Sidn)

La fonction I peut être similaire à celle utilisée pour la sélection des documents pertinents via un moteur de recherche Web, par exemple google, (http://www.google.com) dans lequel une note est affectée à chaque document de la collection contenant les mots de la requête. Le poids de chaque mot de la requête est pondéré par son nombre d'occurrence dans le document ainsi que leur position dans le document. Par exemple, un mot apparaissant au début du document, ou dans un titre, est considéré comme plus important. Une telle méthode d'évaluation est décrite en détail à l'adresse Url suivante: http://citeseer.nj.nec.com/balabanovic97adaptive.html.

Le poids peut également prendre en compte le profil de l'utilisateur, déterminé par les contextes déjà rencontrés par exemple.

Un usager auquel est associé une entité mobile comme un téléphone mobile ou un assistant personnel de type PDA, voit donc se construire implicitement (par le simple fait de se déplacer) une représentation de son contexte courant. La fonction d'interprétation de son contexte courant permet de déduire l'ensemble des services auxquels il peut accéder dans son contexte courant.

En d'autres termes, le couple usager/poste portatif d'usager peut être considéré comme un "curseur" dans un espace d'informations, la position du curseur étant définie par les attributs du contexte (position, date, entités mobiles à proximité, mots clés, ...).

Par exemple, dans un salon informatique, chaque stand dispose d'une station mobile SMi décrivant au moyen d'attributs Aij ("mobile", "wireless", "pda"...) le stand. Un visiteur en se promenant dans le salon est en permanence à proximité de plusieurs stands, mais grâce à sa fonction d'interprétation, les informations correspondant aux stands les plus pertinents pour lui sont, affichées en priorité grâce à une fonction d'interprétation qui sélectionne les informations pertinentes. Cet ensemble d'informations évolue au cours de ses déplacements (ce qui est analogue à une navigation sur le web).

En d'autres termes, un poste portatif d'usager Ui situé dans le périmètre Pi d'une station mobile SMi découvre le contexte Ci de ladite station mobile à l'issue d'un échange de données radiofréquence courte portée entre ladite station mobile et le poste portatif d'usager. Le contexte Ci s'affiche par exemple sur l'écran du poste portatif d'usager. En réponse à cet affichage, l'usager peut émettre une requête de sélection à un serveur distant comprenant un moteur de recherche. Dans le cas où le poste portatif d'usager comprend un équipement GSM, la requête de sélection peut être communiquée à travers un message SMS (Short Message Service, c'est-à-dire service de message court) ou selon une requête WAP. Le moteur de recherche traite alors la requête de sélection ainsi communiquée. L'ensemble des documents pertinents (ici des identifiants de service Sid au format d'une adresse URL) répondant à la requête est ensuite communiqué au poste portatif d'usager via une communication téléphonique GSM. L'usager peut alors sélectionner l'un des documents (identifiants de service Sid) ainsi proposés sur l'écran d'affichage du poste mobile d'usager. Après sélection, l'usager accède au document (service correspondant à l'identifiant) ainsi choisi via une communication téléphonique de type WAP par exemple.

Le mode de réalisation décrit ci-avant est préférable lorsque les ressources matérielles en puissance de calcul ou en capacité de stockage sont limitées sur le poste mobile d'usager. En effet, c'est le serveur distant qui réalise la fonction d'interprétation du contexte à la suite d'une communication des attributs du contexte par l'interface d'accès au service (par exemple, message SMS ou requête WAP dans le cas d'un équipement GSM).

Dans le cas où le poste portatif d'usager dispose d'une base locale apte à contenir des informations ou services contextuels, il est possible de mettre en oeuvre le procédé selon l'invention en exploitant principalement les ressources du poste portatif d'usager.

Dans ce cas, le poste portatif d'usager découvre le contexte Ci de ladite station mobile à l'issue d'un échange de données radiofréquence courte portée entre ladite station mobile et le poste portatif d'usager. Le contexte Ci s'affiche par exemple sur l'écran du poste d'usager.

Par exemple, dans le cas d'un zoo où des stations mobiles SM1 et SM2 sont associées respectivement à des contextes C1 {oiseau, chien, chat} et C2 {poisson, éléphant, reptile}, l'usager se trouvant dans la portée de la station mobile SM1 voit sur son écran le contexte C1. En réponse à cet affichage, l'usager peut émettre une requête à destination de la base locale du poste portatif d'usager contenant des informations contextuelles préchargées. La requête de l'usager peut porter par exemple sur les oiseaux. Le moteur de recherche associé à la base locale traite alors la requête. L'ensemble des identifiants de service ou documents pertinents répondant à la requête "oiseaux" est ensuite affiché sur l'écran du poste portatif d'usager. L'usager peut alors sélectionner l'un des services ou documents ainsi proposés sur l'écran d'affichage du poste mobile d'usager. Après sélection, l'usager accède au service ou document choisi contenu dans la base locale. Cet ensemble d'informations peut évoluer au cours du déplacement de l'usager, notamment lorsqu'il est dans la portée de la station mobile SM2 associé au contexte C2.

## Revendications

1. Procédé de téléphonie mobile dans lequel:
a) on prévoit au moins un service contextuel (Si) apte à -exploiter -la position et/ou l'identité d'un usager porteur d'un poste portatif (Ui) pour créer, contrôler l'accès et/ou moduler au moins certaines caractéristiques dudit service,
b) on prévoit au moins une interface d'accès (Bai) appartenant à une infrastructure de communication choisie, pour permettre l'accès audit service contextuel à au moins un poste portatif d'usager (Ui) selon une couverture géographique choisie,
c) on prévoit au moins une station mobile (SMi) distribuée dans la zone de couverture de l'interface d'accès,
d) on équipe la station mobile (SMi) de moyens de communication aptes à établir une communication radiofréquence de courte portée à l'intérieur d'un périmètre choisi entre le poste portatif d'usager (Ui), et la station mobile (SMi), et
e) on équipe au moins un poste portatif d'usager (Ui) de moyens de communication radiofréquence de courte portée conjugués avec ceux de la station mobile pour établir ladite communication radiofréquence de courte portée à l'intérieur du périmètre choisi entre le poste portatif et la station mobile,
ce qui permet audit poste portatif d'usager (Ui) de communiquer avec la station mobile (SMi) ainsi qu'avec l'interface d'accès (Bai) pour accéder audit service contextuel (Si) adapté selon la position et/ou l'identité de l'usager.

2. Procédé selon la revendication 1, **caractérisé en ce qu'**au moins certaines caractéristiques du service contextuel (Si) appartiennent au groupe formé par l'absence/présence, le contenu, la disponibilité, le contrôle d'accès, la tarification dudit service.

3. Procédé selon la revendication 1, **caractérisé en ce qu'**on prévoit une pluralité de stations mobiles (SMi) agencées en réseau.

4. Procédé selon la revendication 1 ou la revendication 3, **caractérisé en ce que** la station mobile ou la pluralité de stations mobiles agencées en réseau couvre(nt) sensiblement exactement l'intérieur d'un périmètre choisi (Pi).

5. Procédé selon la revendication 4, **caractérisé en ce que** l'on attribue un identifiant de périmètre (Pid) pour identifier ledit périmètre (Pi), à chaque identifiant de périmètre (Pid) étant associé au moins un attribut (Aij) permettant de localiser l'usager et/ou de caractériser le périmètre.

6. Procédé selon la revendication 5, **caractérisé en ce qu'**à chaque identifiant de périmètre (Pid) est associée une liste d'attributs (Aij).

7. Procédé selon la revendication 5 ou la revendication 6, **caractérisé en ce que** l'on attribue un identifiant de service (Sid), en particulier de type adresse URL ou analogue pour permettre l'accès au service associé audit périmètre (Pi).

8. Procédé selon la revendication 1, **caractérisé en ce que** la station mobile (SMi) est apte à établir une communication avec l'interface d'accès (Bai), la station mobile (SMi) jouant ainsi le rôle d'un poste portatif.

9. Procédé selon la revendication 1, **caractérisé en ce que** l'on attribue un identifiant d'usager (Uid) pour chaque poste portatif d'usager afin d'identifier ledit usager.

10. Procédé selon les revendications 5 ou 6, et/ou 9, **caractérisé en ce que** le service contextuel est adapté en fonction de l'identifiant de l'usager (Uid) et/ou de l'identifiant de périmètre (Pid) dans lequel se trouve le poste portatif d'usager.

11. Procédé selon les revendications 5 et 7, **caractérisé en ce que** l'on prévoit une étape d'acquisition de l'identifiant de service (Sid) et de l'identifiant de périmètre (Pid) à l'issue d'une communication radiofréquence courte portée (2) établie entre le poste portatif d'usager (Ui) qui entre dans le périmètre (Pi) et la station mobile (SMi) la plus proche.

12. Procédé selon la revendication 11, **caractérisé en ce que** l'on prévoit une étape d'application du service contextuel ainsi connu par l'identifiant de service (Sid) à l'issue d'une communication bidirectionnelle (4 et 6) établie entre le poste portatif d'usager (Ui) et l'interface d'accès (Bai).

13. Procédé selon les revendications 5 et 7, **caractérisé en ce que** l'on prévoit une étape d'acquisition de l'identifiant de l'usager (Uid) à l'issue d'une communication radiofréquence courte portée établie entre le poste portatif d'usager (Ui) qui entre dans le périmètre (Pi) et la station mobile (SMi) la plus proche, et **en ce que** l'on prévoit une étape d'application du service contextuel à l'issue d'une communication établie entre la station mobile et l'interface d'accès pour annoncer au service (Si) la présence de l'usager dans le périmètre considéré (Pi), le service étant apte à établir une interaction avec le poste portatif de l'usager en adaptant le contenu dudit service en fonction du profil de l'usager grâce au couple identifiant usager (Ui) et identifiant périmètre (Pid).

14. Procédé selon les revendications 6 et 7, **caractérisé en ce que** l'on prévoit une étape d'acquisition des attributs (Aij) de l'identifiant de périmètre (Pid) et des identifiants de service associés (Sid) à l'issue d'une communication radiofréquence courte portée (2) établie entre le poste portatif d'usager (Ui) qui entre dans le périmètre (Pi) et la station mobile (SMi) la plus proche.

15. Procédé selon la revendication 14, **caractérisé en ce que** l'on prévoit une étape de sélection d'un service contextuel à l'issue d'une session de sélection de type requête/réponse entre le poste portatif d'usager (Ui) et un serveur distant appartenant à l'interface d'accès (Bai), et dans laquelle la requête de sélection comprend au moins certains attributs (Aij) de l'identifiant de paramètre (Pid) ainsi acquis tandis que le serveur distant communique au poste portatif d'usager via l'infrastructure d'accès l'ensemble des identifiants de service pertinents répondant à la requête et parmi lequel l'usager sélectionne l'identifiant de service (Sid) de son choix.

16. Procédé selon la revendication 1, **caractérisé en ce qu'**on prévoit une infrastructure de communication appartenant au groupe formé par le réseau cellulaire global du type GSM, UMTS ou analogue, le réseau local de type ad hoc ou analogue.

17. Procédé selon la revendication 1, **caractérisé en ce qu'**on prévoit un poste portatif appartenant au groupe formé par les téléphones mobiles, les assistants numériques personnels (PDA) ou analogues.

18. Dispositif de téléphonie mobile pour la mise en oeuvre du procédé selon l'une des revendications 1 à 17.

19. Poste portatif d'usager destiné à coopérer avec le dispositif de téléphonie mobile selon la revendication 18.

20. Station mobile destinée à coopérer avec le dispositif de téléphonie mobile selon la revendication 18.

21. Interface d'accès destinée à coopérer avec le dispositif de téléphonie selon la revendication 18.

## Claims

1. Mobile telephony method in which:
a) there is provided at least one contextual service (Si) capable of using the position and/or the identity of a user carrying a portable set (Ui) to create, control access and/or modulate at least some characteristics of the said service,
b) there is provided at least one access interface (Bai) belonging to a chosen communication infrastructure, to allow access to the said contextual service to at least one user portable set (Ui) according to a chosen geographical coverage,
c) there is provided at least one mobile station (SMi) distributed in the zone of coverage of the access interface,
d) the mobile station (SMi) is equipped with communication means capable of establishing a short-range radiofrequency communication within a chosen perimeter between the user portable set (Ui), and the mobile station (SMi), and
e) at least one user portable set (Ui) is equipped with short-range radiofrequency communication means paired with those of the mobile station so as to establish the said short-range radiofrequency communication within the chosen perimeter between the portable set and the mobile station,
thereby allowing the said user portable set (Ui) to communicate with the mobile station (SMi) as well as with the access interface (Bai) to access the said contextual service (Si) adapted according to the position and/or the identity of the user.

2. Method according to Claim 1, **characterized in that** at least some characteristics of the contextual service (Si) belong to the group formed by the absence/presence, the content, the availability, the access control, the pricing of the said service.

3. Method according to Claim 1, **characterized in that** there are provided a plurality of mobile stations (SMi) arranged in a network.

4. Method according to Claim 1 or Claim 3, **characterized in that** the mobile station or the plurality of mobile stations arranged in a network covers substantially exactly the interior of a chosen perimeter (Pi).

5. Method according to Claim 4, **characterized in that** a perimeter identifier (Pid) is attributed to identify the said perimeter (Pi), with each perimeter identifier (Pid) being associated at least one attribute (Aij) enabling the location of the user and/or the characterization of the perimeter.

6. Method according to Claim 5, **characterized in that** with each perimeter identifier (Pid) is associated a list of attributes (Aij).

7. Method according to Claim 5 or Claim 6, **characterized in that** a service identifier (Sid), in particular of URL address type or the like, is attributed to allow access to the service associated with the said perimeter (Pi).

8. Method according to Claim 1, **characterized in that** the mobile station (SMi) is capable of establishing a communication with the access interface (Bai), the mobile station (SMi) thus playing the role of a portable set.

9. Method according to Claim 1, **characterized in that** a user identifier (Uid) is attributed for each user portable set so as to identify the said user.

10. Method according to Claims 5 or 6, and/or 9, **characterized in that** the contextual service is adapted according to the identifier of the user (Uid) and/or the identifier of the perimeter (Pid) in which the user portable set is situated.

11. Method according to Claims 5 and 7, **characterized in that** there is provided a step of acquiring the service identifier (Sid) and the perimeter identifier (Pid) after a short-range radiofrequency communication (2) established between the user portable set (Ui) which enters the perimeter (Pi) and the closest mobile station (SMi).

12. Method according to Claim 11, **characterized in that** there is provided a step of applying the contextual service thus known by the service identifier (Sid) after a bidirectional communication (4 and 6) established between the user portable set (Ui) and the access interface (Bai).

13. Method according to Claims 5 and 7, **characterized in that** there is provided a step of acquiring the identifier of the user (Uid) after a short-range radiofrequency communication established between the user portable set (Ui) which enters the perimeter (Pi) and the closest mobile station (SMi), and **in that** there is provided a step of applying the contextual service after a communication established between the mobile station and the access interface to announce to the service (Si) the presence of the user in the perimeter considered (Pi), the service being capable of establishing an interaction with the user portable set by adapting the content of the said service according to the user profile thanks to the user identifier (Ui) and perimeter identifier (Pid) pair.

14. Method according to Claims 6 and 7, **characterized in that** there is provided a step of acquiring attributes (Aij) of the perimeter identifier (Pid) and of the associated service identifiers (Sid) after a short-range radiofrequency communication (2) established between the user portable set (Ui) which enters the perimeter (Pi) and the closest mobile station (SMi).

15. Method according to Claim 14, **characterized in that** there is provided a step of selecting a contextual service after a selection session of request/response type between the user portable set (Ui) and a remote server belonging to the access interface (Bai), and in which the selection request comprises at least some attributes (Aij) of the perimeter identifier (Pid) thus acquired while the remote server communicates to the user portable set via the access infrastructure all the relevant service identifiers matching the request and among which the user selects the service identifier (Sid) of his choice.

16. Method according to Claim 1, **characterized in that** there is provided a communication infrastructure belonging to the group formed by the global cellular network of the GSM, UMTS or similar type, the local network of ad-hoc or similar type.

17. Method according to Claim 1, **characterized in that** there is provided a portable set belonging to the group formed by mobile telephones, personal digital assistants (PDA) or the like.

18. Mobile telephone device for the implementation of the method according to one of Claims 1 to 17.

19. User portable set for cooperating with the mobile telephone device according to Claim 18.

20. Mobile station for cooperating with the mobile telephone device according to Claim 18.

21. Access interface for cooperating with the telephone device according to Claim 18.

## Patentansprüche

1. Mobiltelefonie-Verfahren, bei dem:
a) man wenigstens einen Kontextservice (Si) vorsieht, fähig die Position und/oder die Identität eines ein Mobilfunkgerät (Ui) besitzenden Teilnehmers zu nutzen, um den Zugriff herzustellen, zu kontrollieren und/oder wenigstens einige Charakteristiken des genannten Service anzupassen,
b) man wenigstens eine zu einer gewählten Kommunikations-Infrastruktur gehörendes Zugriffschnittstelle (Bai) vorsieht, um entsprechend einer gewählten geographischen Abdeckung wenigstens einem Teilnehmer-Mobilfunkgerät (Ui) den Zugriff auf den genannten Kontextservice zu ermöglichen,
c) man in der Abdeckungszone der Zugriffschnittstelle wenigstens eine Mobilfunkstation (SMi) vorsieht,
d) man wenigstens eine Mobilfunkstation (SMi) mit Kommunikationseinrichtungen ausrüstet, die fähig sind, eine Radiofrequenzkommunikation von kurzer Reichweite innerhalb eines zwischen dem Mobilfunkgerät (Ui) des Teilnehmers und der Mobilfunkstation (SMi) gewählten Perimeters herzustellen,
e) man wenigstens ein Teilnehmer-Mobilfunkgerät (Ui) mit Radiofrequenzkommunikationseinrichtungen von kurzer Reichweite ausrüstet, fähig gemeinsam mit denen der Mobilfunkstation die genannte Kurzreichweiten-Radiofrequenzkommunikation innerhalb eines zwischen dem Mobilfunkgerät (Ui) des Teilnehmers und der Mobilfunkstation gewählten Perimeters herzustellen,
was dem genannten Teilnehmer-Mobilfunkgerät (Ui) ermöglicht, sowohl mit der Mobilfunkstation (SMi) als auch mit der Zugriffschnittstelle (Bai) zu kommunizieren, um auf den genannten entsprechend der Position und/oder der Identität des Teilnehmers angepassten Kontextservice (Si) zuzugreifen.

2. Verfahren nach Anspruch 1, **dadurch gekennzeichnet, dass** wenigstens einige Charakteristiken des Kontextservice (Si) zu der Gruppe gehören, die gebildet wird durch die Absenz/Präsenz, den Inhalt, die Verfügbarkeit, die Zugriffskontrolle, die Tarifierung des genannten Service.

3. Verfahren nach Anspruch 1, **dadurch gekennzeichnet, dass** man eine Vielzahl netzartig angeordneter Mobilfunkstationen (SMi) vorsieht.

4. Verfahren nach Anspruch 1 oder Anspruch 3, **dadurch gekennzeichnet, dass** die Mobilfunkstation oder die Vielzahl netzartig angeordneter Mobilfunkstationen das Innere eines gewählten Perimeters (Pi) im Wesentlichen exakt abdeckt.

5. Verfahren nach Anspruch 4, **dadurch gekennzeichnet, dass** man ein Perimeterkennzeichen (Pid) zuteilt, um den genannten Perimeter (Pi) zu identifizieren, wobei jedem Perimeterkennzeichen (Pid) wenigstens ein Attribut (Aij) zugeordnet wird, das ermöglicht, den Teilnehmer zu lokalisieren und/oder den Perimeter zu charakterisieren.

6. Verfahren nach Anspruch 5, **dadurch gekennzeichnet, dass** jedem Perimeterkennzeichen (Pid) eine Liste von Attributen (Aij) zugeordnet wird.

7. Verfahren nach Anspruch 5 oder Anspruch 6, **dadurch gekennzeichnet, dass** man ein Servicekennzeichen (Sid) zuteilt, insbesondere des Typs URL-Adresse oder analog, um den Zugriff auf den dem genannten Perimeter (Pi) zugeordneten Service zu ermöglichen.

8. Verfahren nach Anspruch 1, **dadurch gekennzeichnet, dass** die Mobilfunkstation (SMi) fähig ist, eine Kommunikation mit der Zugriffschnittstelle (Bai) herzustellen, wobei die Mobilfunkstation (SMi) auf diese Weise die Rolle eines Mobilfunkgeräts spielt.

9. Verfahren nach Anspruch 1, **dadurch gekennzeichnet, dass** man jedem Teilnehmer-Mobilfunkgerät ein Teilnehmerkennzeichen (Uid) zuteilt, um den genannten Teilnehmer zu identifizieren.

10. Verfahren nach den Ansprüchen 5 oder 6 und/oder 9, **dadurch gekennzeichnet, dass** der Kontextservice angepasst wird in Abhängigkeit von dem Teilnehmerkennzeichen (Uid) und/oder dem Perimeterkennzeichen (Pid) des Perimeters, in dem sich das Mobilfunkgerät des Teilnehmers befindet.

11. Verfahren nach den Ansprüchen 5 und 7, **dadurch gekennzeichnet, dass** man am Ende einer Radiofrequenzkommunikation mit kurzer Reichweite (2), hergestellt zwischen dem in den Perimeter (Pi) eindringenden Teilnehmer-Mobilfunkgerät (Ui) und der nächsten Mobilfunkstation (SMi), einen Schritt zu Erfassung des Servicekennzeichens (Sid) und des Perimeterkennzeichens (Pid) vorsieht.

12. Verfahren nach Anspruch 11, **dadurch gekennzeichnet, dass** man am Ende einer bidirektionalen Kommunikation (4 und 6), hergestellt zwischen dem Teilnehmer-Mobilfunkgerät (Ui) und der Zugriffschnittstelle (Bai), einen Schritt zu Anwendung des durch das Servicekennzeichen (Sid) bekannten Kontextservice vorsieht.

13. Verfahren nach den Ansprüchen 5 und 7, **dadurch gekennzeichnet, dass** man am Ende einer Radiofrequenzkommunikation mit kurzer Reichweite, hergestellt zwischen dem in den Perimeter (Pi) eindringenden Teilnehmer-Mobilfunkgerät (Ui) und der nächsten Mobilfunkstation (SMi), einen Schritt zu Erfassung des Teilnehmerkennzeichens (Uid) vorsieht, und **dadurch**, dass man am Ende einer Kommunikation zwischen der Mobilfunkstation und der Zugriffschnittstelle einen Schritt zu Anwendung des Kontextservice vorsieht, um dem Service (Si) die Präsenz des Teilnehmers in dem betreffenden Perimeter (Pi) mitzuteilen, wobei der Service fähig ist, eine Interaktion mit dem Teilnehmer-Mobilfunkgerät zu realisieren, indem der Inhalt des genannten Service in Abhängigkeit von dem Profil des Teilnehmers dank dem Paar aus Teilnehmerkennzeichen (Ui) und Perimeterkennzeichen (Pid) angepasst wird.

14. Verfahren nach den Ansprüchen 6 und 7, **dadurch gekennzeichnet, dass** man am Ende einer Radiofrequenzkommunikation mit kurzer Reichweite (2), hergestellt zwischen dem in den Perimeter (Pi) eindringenden Teilnehmer-Mobilfunkgerät (Ui) und der nächsten Mobilfunkstation (SMi), einen Schritt zur Erfassung der Attribute (Aij) des Perimeterkennzeichens (Pid) und zugeordneter Servicekennzeichen (Sid) vorsieht.

15. Verfahren nach Anspruch 14, **dadurch gekennzeichnet, dass** man am Ende einer Session zur Selektion des Anfrage/Antwort-Typs zwischen dem Teilnehmer-Mobilfunkgerät (Ui) und einem zu der Zugriffschnittstelle (Bai) gehörenden Fernserver einen Schritt zu Selektion eines Kontextservice vorsieht, in dem die Selektionsanfrage wenigstens einige Attribute (Aij) des so erfassten Parameter- bzw. Perimeterkennzeichens (Pid) umfasst, während der Fernserver dem Mobilfunkgerät des Teilnehmers über die Zugriffs-Infrastrukur die Gesamtheit der der Anfrage entsprechenden wichtigen Kennzeichen mitteilt und aus der der Teilnehmer das Servicekennzeichen (Sid) seiner Wahl selektiert.

16. Verfahren nach Anspruch 1, **dadurch gekennzeichnet, dass** man eine Kommunikationsinfrastruktur vorsieht, die zu der Gruppe gehört, die gebildet wird durch das globale Mobilfunknetz des Typs GSM, UMTS oder analog, das lokale Netz des Ad-hoc-Typs oder analog.

17. Verfahren nach Anspruch 1, **dadurch gekennzeichnet, dass** man ein Mobilfunkgerät vorsieht, das zu der Gruppe gehört, die gebildet wird durch die Mobiltelefone, die Handcomputer (PDA) oder analoge Geräte.

18. Mobiltelefonievorrichtung nach Anspruch 1 zur Anwendung des Verfahrens nach einem der Ansprüche 1 bis 17.

19. Teilnehmer-Mobilfunkgerät, bestimmt zur Kooperation mit der Mobiltelefonievorrichtung nach Anspruch 18.

20. Mobilfunkstation, bestimmt zu Kooperation mit der Mobiltelefonievorrichtung nach Anspruch 18.

21. Zugriffschnittstelle, bestimmt zu Kooperation mit der Mobiltelefonievorrichtung nach Anspruch 18.
